# EUROPEAN PATENT APPLICATION

(11) **EP 2 921 797 A1**
(43) Date of publication of application: **23.09.2015**
(21) Application number: 13854531.4
(22) Date of filing: 17.09.2013
(51) Int. Cl.: F24J 2/14, F03G 6/00

(54) **LIGHT COLLECTION DEVICE FOR SOLAR POWER GENERATION**

(30) Priority: 16.11.2012 JP 2012252556
(71) Applicant: Chiyoda Corporation, Kanagawa 220-8765 (JP)
(72) Inventor: SAITO, Hirokazu, Yokohama-shi Kanagawa 220-8765 (JP); SUZUKI, Toshihisa, Yokohama-shi Kanagawa 220-8765 (JP)
(74) Representative: Trinks, Ole
(86) International application number: PCT/JP2013/005479
(87) International publication number: WO 2014/076858

(57) **Abstract**

A solar-thermal collector (10) includes a shaft (13) supported by stands, arms (14a, 14b), which are fixed to the shaft (13) and are arranged at intervals along the length of the shaft (13), and a flexible reflector (15) supported by the arms (14a, 14b). Each arm (14a, 14b) has reflection-surface forming faces such that the vertical cross section thereof relative to the shaft (13) is parabolic. Ends of the reflector (15) are firmly attached to the reflection-surface forming faces of the arms (14a, 14b), so that the reflection surface of the reflector (15) is formed into a parabolic-cylindrical surface suited to the concentration of the sunlight.

## Description

### [Technical Field]

The present invention relates to a light condensing apparatus for solar thermal power generation (solar-thermal collector or solar collector), a solar thermal power generation system using said solar-thermal collector, and a method for mounting a reflector used for the solar thermal power generation.

### [Background Art]

The following solar thermal power generation method is known in the conventional practice (see Reference (1) in the following Related Art List, for instance). The sunlight is concentrated onto a heat collecting tube by a light condensing apparatus for use in the generation of solar thermal power that uses a curved surface reflecting mirror. And a fluid, such as oil, flowing through the heat collecting tube is heated and a steam turbine is rotated using the fluid heated there so as to generate the electric power. Hereinafter, this light condensing apparatus for use in the generation of solar thermal power will be referred to as a "solar-thermal collector" or "solar collector" also. The solar thermal power generation method is low, in introduction costs, than the photovoltaic power generation method. Furthermore, the solar thermal power generation method can generate electricity on a 24-hour basis. Also, the solar thermal power generation method does not use any fuel and is therefore advantageous in that the cost of fuel can be reduced and the emission of carbon dioxide can be suppressed.

In the solar-thermal collector, the reflecting mirror needs to be designed beforehand in a curved surface shape, with high precision, in order to efficiently focus the sunlight onto the heat collecting tube. For example, the reflecting mirror is designed to have a parabolic cross section, which is the curved surface shape. In the conventional practice, therefore, the reflecting mirror made of glass having a predetermined shape is formed at a manufacturing site, then this glass-made reflecting mirror is transported to an installation location and the reflecting mirror is installed in a stand. This forms a solar-thermal collector.

### [Related Art Documents]

[Patent Document 1] United States Patent Application Publication No. US2010/0043776.

### [Disclosure of the Invention]

### [Problems to be solved by the Invention]

However, in the above-described conventional apparatus, the reflecting mirror made of glass needs to be bent and processed with high precision at the manufacturing site. Thus, the manufacturing cost tends to increase. Also, since the glass-made reflecting mirror in the curved surface shape is bulky when it is transported, the efficiency of transporting it to the installation site is low. Thus, the installation cost tends to increase as well.

The present invention has been made in view of the foregoing circumstances, and a purpose of the invention is to provide a low-cost solar-thermal collector and a low-cost solar thermal power generation system.

### [Means for Solving the Problem]

In order to resolve the foregoing problems, a solar-thermal collector according to one embodiment of the present invention includes: a shaft supported by stands; at least two arms, each having a reflection-surface forming face, configured to be secured to the shaft and arranged at intervals in a direction of length of the shaft, the reflection-surface forming face being such that a vertical cross section thereof relative to the shaft is curved; a flexible reflector configured to be supported by the two arms at both ends of the reflector, the reflector reflecting and concentrating the sunlight; and an adhesion means configured to firmly attach the ends of the reflector to the reflection-surface forming face of each of the arms.

The arm may have a second face that is arranged at a predetermined interval relative to the reflection-surface forming face, and the end of the reflector may be inserted into a groove, which is formed between the reflection-surface forming face and the second face, so that the reflector may be supported by the arms.

The reflector may be arranged such that a reflection surface of the reflector faces the reflection-surface forming face of the arm and such that a back side of the reflection surface thereof faces the second face of the arm.

The adhesion means may include a plate-like part in at least part of the adhesion means, and the end of the reflector may be firmly attached to the reflection-surface forming face of the arm by press-fitting the plate-like part in between the end of the reflector and the second face of the arm.

The plate-like part may be formed in a wedge shape.

The adhesion means may include an elastic part in at least part of the adhesion means, and the end of the reflector may be firmly attached to the reflection-surface forming face of the arm by providing the elastic part in between the end of the reflector and the second face of the arm.

The elastic part may be formed of a plate spring.

The adhesion means may have a rod-like member and a securing member by which the rod-like member is secured to the arm, and the end of the reflector may be attached firmly to the reflection-surface forming face of the arm by pressing the end of the reflector with the rod-like member.

Another embodiment of the present invention relates to a solar thermal power generation system. The solar thermal power generation system includes: the above-described solar-thermal collector; a heat collecting tube configured to receive light concentrated by the solar-thermal collector; a steam turbine configured to be rotated by steam generated using a heated fluid in the heat collecting tube; and a power generator configured to generate electricity through rotation of the steam turbine.

Still another embodiment of the present invention relates to a method for manufacturing a solar-thermal collector. The method includes the steps of: supporting a shaft by stands; fixing at least two arms, each having a reflection-surface forming face, to the shaft wherein the arms are arranged at intervals in a direction of length of the shaft and the reflection-surface forming face is such that a vertical cross section thereof relative to the shaft is curved; having both ends of a flexible reflector, which reflects and concentrates the sunlight, supported by the two arms; and firmly attaching the ends of the reflector to the reflection-surface forming faces of the arms.

Still another embodiment of the present invention relates to a method for mounting a reflector. In this method, a flexible reflector, which reflects and concentrates the sunlight, is mounted to at least two arms, each having a reflection-surface forming face, which are secured to a shaft and arranged at intervals in a direction of length of the shaft, wherein the reflection-surface forming face is such that a vertical cross section thereof relative to the shaft is curved. The method includes: a first step of curving the reflector along the reflection-surface forming face of the arm; and a second step of firmly attaching an end of the reflector to the reflection-surface forming face of the arm.

The arm may have a second face spaced apart from the reflection-surface forming face and a groove formed between the second face and the reflection-surface forming face, and the first step may include a step of inserting the end of the reflector into the groove.

Optional combinations of the aforementioned constituting elements, and implementations of the invention in the form of apparatuses, methods, systems, and so forth may also be effective as additional modes of the present invention.

### [Effects of the Invention]

The present invention provides a low-cost solar-thermal collector and a low-cost solar thermal power generation system.

### [Brief Description of the Drawings]

FIG. 1 is a perspective view of a solar-thermal collector according to an embodiment of the present invention;
FIG. 2 is a front view of a solar-thermal collector;
FIG. 3 is a cross-sectional view taken along the line A-A of the solar-thermal collector shown in FIG. 2;
FIG. 4 is a diagram to explain a cross-sectional structure of a reflector;
FIG. 5 is a cross-sectional view taken along the line B-B of the solar-thermal collector shown in FIG. 3;
FIG. 6 shows how a single piece of reflector is supported by two adjacent arms;
FIG. 7 is a diagram to explain a method for assembling and installing a solar-thermal collector according to an embodiment;
FIG. 8 is a diagram to explain a modification of an adhesion structure where a reflection surface is attached firmly to a reflection-surface forming face;
FIG. 9 is a diagram to explain another modification of the adhesion structure where the reflection surface is attached firmly to the reflection-surface forming face;
FIG. 10 is a diagram to explain still another modification of the adhesion structure where the reflection surface is attached firmly to the reflection-surface forming face;
FIG. 11 is a diagram to explain still another modification of the adhesion structure where the reflection surface is attached firmly to the reflection-surface forming face; and
FIG. 12 is a diagram to explain a solar thermal power generation system using a solar-thermal collector according to an embodiment.

### [Modes for Carrying Out the Invention]

The invention will now be described by reference to the preferred embodiments.

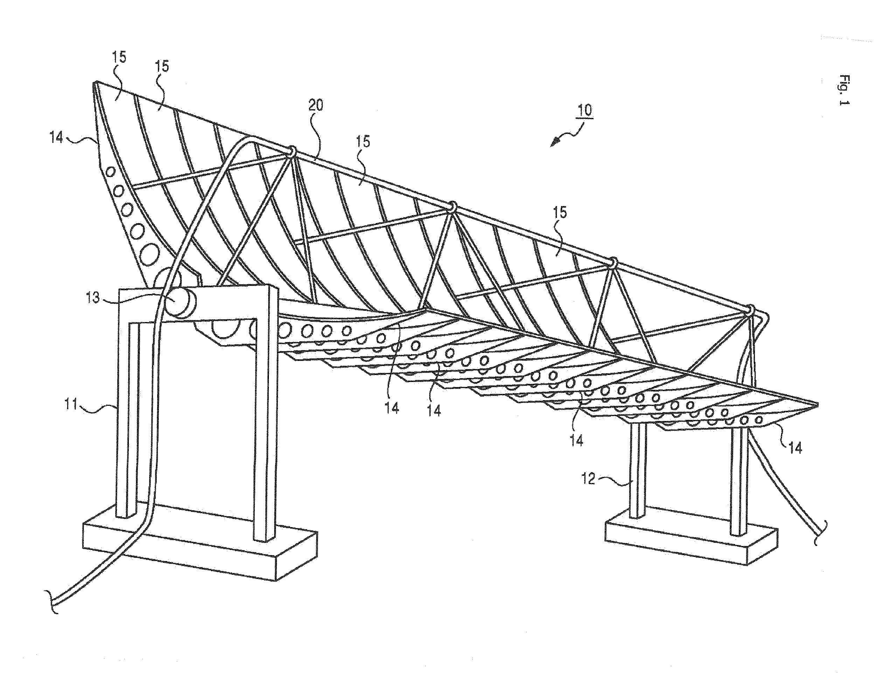

FIG. 1 is a perspective view of a light condensing apparatus for use in the generation of solar thermal power 10 (hereinafter referred to as "solar-thermal collector 10" or simply "solar collector 10") according to an embodiment of the present invention. As illustrated in FIG. 1, the solar-thermal collector 10 is comprised mainly of stands 11 and 12 on the ground, a shaft 13, which is rotatably supported by the stands 11 and 12, a plurality of arms 14, which are fixed to the shaft 13 and are arranged at intervals along the length thereof, and a plurality of reflectors 15 supported by the arms 14. The reflection surfaces of reflectors 15 are formed with a parabolic-cylindrical surface such that the vertical cross section of the reflection surfaces thereof relative to the shaft 13 is parabolic.

As shown in FIG. 1, a heat collecting tube 20 is provided in front of the reflectors 15 and is supported in parallel with the shaft 13. A fluid such as oil flows through the heat collecting tube 20. The fluid is circulated by a not-shown pump.

In the solar-thermal collector 10, the sunlight is concentrated onto the heat collecting tube 20 using the reflectors 15 and thereby the fluid flowing through the heat collecting tube 20 is heated. The fluid heated by the solar-thermal collector 10 is sent to a heat exchanger. The heat exchanger generates steam using the heated fluid and then sends the steam to a steam turbine. The steam turbine rotates a turbine using the steam so as to generate electricity.

The solar-thermal collector 10 may include a rotating apparatus (not shown) which rotates the reflectors 15 around the shaft 13. If, for example, the reflectors 15 are rotated in such a manner as to track the positions of the sun, the fluid can be efficiently heated and therefore the power generation efficiency can be enhanced.

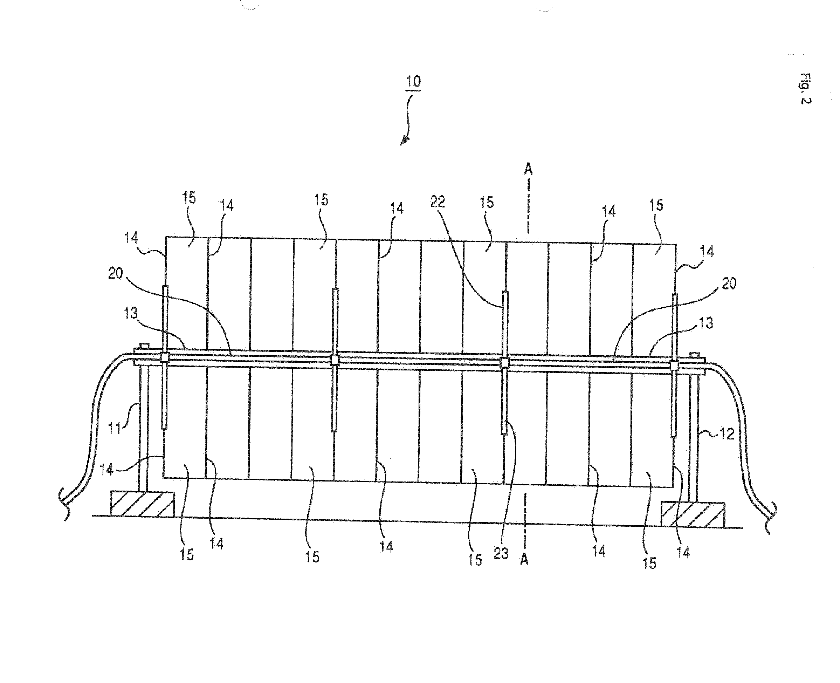

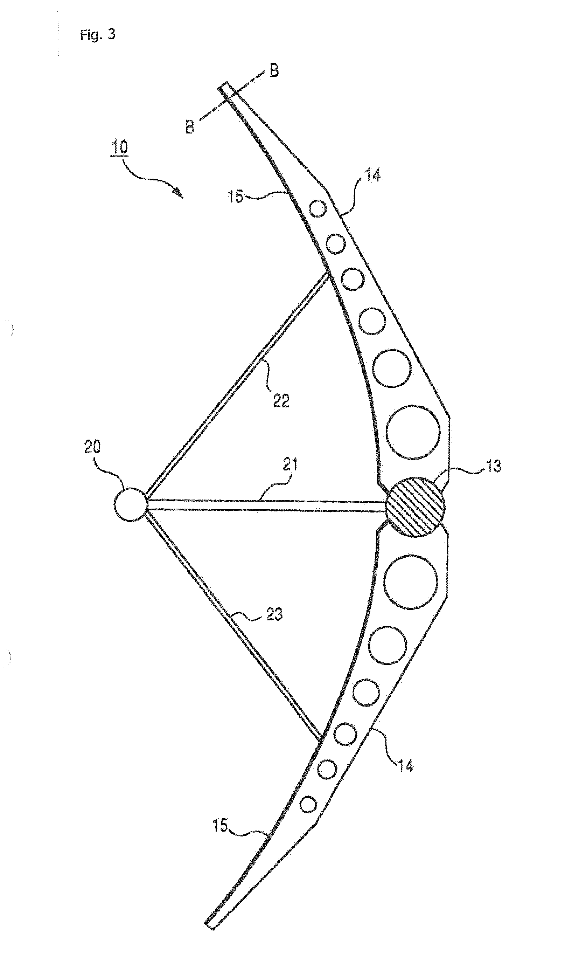

FIG. 2 is a front view of the solar-thermal collector 10. FIG. 3 is a cross-sectional view taken along the line A-A of the solar-thermal collector 10 shown in FIG. 2.

As shown in FIG. 2, the solar-thermal collector 10 according to the present embodiment is configured such that the stands 11 and 12 are mounted upright on the ground and the both ends of the shaft 13 are supported by the stands 11 and 12. The shaft 13 may be a pipe made of steel, for instance. The diameter of the shaft 13 may be about several hundreds of millimeters (e.g., about 500 mm to about 700 mm, (e.g., about 600 mm), for instance.

A plurality of arms 14 are secured to the shaft 13 at predetermined intervals along the length thereof. Each arm 14, which is a plate-like body whose thickness is about several millimeters (e.g., about 6 mm), may be formed of steel or the like, for instance. As shown in FIG. 3, each arm 14 is formed such that one side surface thereof is of a parabolic shape. The arms 14 may be fixed to the shaft 13 by welding, for instance. Or alternatively, the arms 14 may be secured to the shaft 13 using bolts and nuts. In this manner, the solar-thermal collector 10 employs a simple structure where the plate-like arms 14 are simply fixed to the shaft 13. This simple structure can reduce the manufacturing cost and the transportation cost, as compared with the truss structure employed in the aforementioned Reference (1), for instance.

In the present embodiment, as shown in FIG. 2, thirteen arms 14 extend upward from the shaft 13. Also, thirteen arms 14 extend downward from the shaft 13. A single piece of reflector 15 is provided between every two adjacent arms 14 along the length of the shaft 13. Thus, twelve reflectors 15 are provided above the shaft 13, whereas twelve reflectors 15 are also provided below the shaft 13. Every two reflectors 15 vertically lined relative to the shaft 13 are arranged line-symmetrically with respect to the shaft 13, thereby forming the reflection surfaces of a parabolic-cylindrical shape.

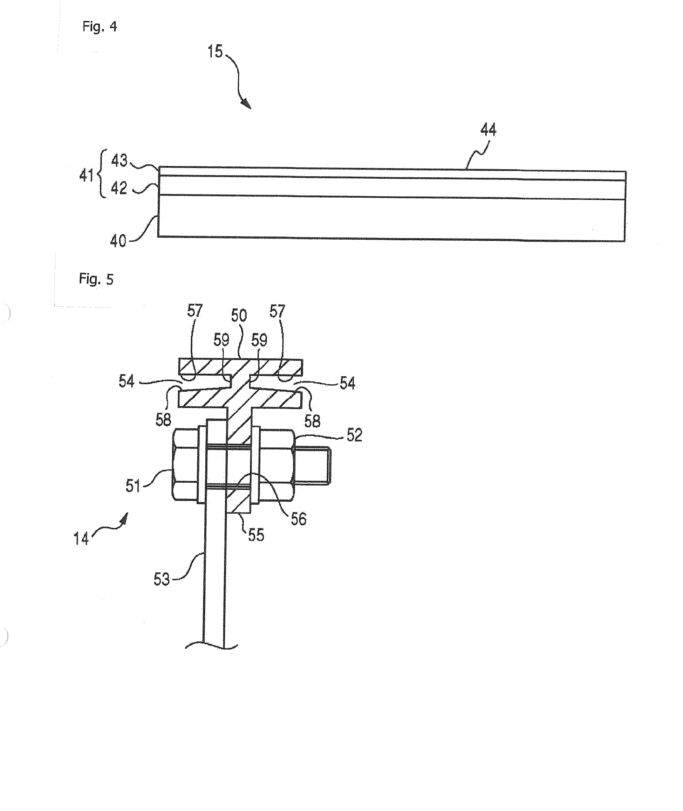

FIG. 4 is a diagram to explain a cross-sectional structure of the reflector 15. As shown in FIG. 4, the reflector 15 is of such a structure that a film mirror 41 is pasted on top of a flexible flat sheet 40. The flexible flat sheet 40 may be a metallic sheet (e.g., steel plate or aluminum plate) whose thickness is about several millimeters (e.g., about 1 mm to about 2 mm), for instance. The film mirror 41 is of such a structure that a reflective layer 43 is provided on top of a flexible film substrate 42. The film substrate 42 may be a known resin-made substrate and may be acrylic or polyester-based film, for instance. The reflective layer 43 may be a metallic reflective layer (e.g., silver reflective layer) formed on the film substrate 42 by vapor-depositing. The reflector 15 formed as above has flexibility.

In the solar-thermal collector 10 according to the present embodiment, the reflector 15, which is a flat plate-like reflector before it is mounted on the arm 14, is bent when it is mounted on the arm 14. Thus a reflection surface 44 of the reflector 15 is formed into a parabolic-cylindrical curved surface so that the reflection surface 44 thereof can be suited to the concentration of sunlight. A detailed description will be given later of a support structure where the arms 14 support the reflectors 15.

In front of the reflector 15, the heat collecting tube 20 is supported by support members 21, 22 and 23 as shown in FIG. 3. The heat collecting tube 20 is supported thereby such that the center of the heat collecting tube 20 is located at the focal point of a parabolic-cylindrical refection surface of the reflectors 15. Since the sunlight reflected by the parabolic-cylindrical reflection surface is concentrated on the focal point of the parabolic-cylindrical surface, provision of the heat collecting tube 20 in the aforementioned location enables the sunlight to be efficiently reflected and concentrated onto the heat collecting tube 20.

FIG. 5 is a cross-sectional view taken along the line B-B of the solar-thermal collector 10 shown in FIG 3. FIG. 5 is an enlarged sectional view of an inner part of the arm 14, and is a diagram to explain the support structure by which to support the reflectors 15. In the present embodiment, the arm 14 is comprised of a plate-like arm body 53, which extends from the shaft 13 and has a parabolic side surface, and a reflector supporting section 50, which is used to immovably support the reflector 15, provided along the inner part of the arm body 53.

The reflector supporting section 50 includes two grooves 54, into which ends of the reflectors are inserted, and a securing section 55, which is used to secure the reflector supporting section 50 to the arm body 53. The securing section 55 has a bolt hole 56, and the reflector supporting section 50 is secured to the arm body 53 using a bolt 51 inserted into the bolt hole 56 and a nut 52. In the present embodiment, the arm 14 is structured such that the arm body 53 and the reflector supporting section 50 are separately formed and then coupled together using the bolt 51 and nut 52. However, the arm body 53 and the reflector supporting section 50 may be formed integrally with each other and therefore may be formed as a single unit.

The two grooves 54 in the reflector supporting section 50 are each formed in a U-shape and are each comprised of a first face 57 and a second face 58, which face each other at a predetermined interval, and a bottom face 59. The two grooves 54 are so formed that they are opened in the mutually opposite directions with the bottom faces 59 disposed therebetween. The first face 57 is located in the inside direction of a parabolic-cylinder than the second face 58, namely located at a heat collecting tube side than the second face 58.

In the present embodiment, the first face 57 serves as a "reflection-surface forming face" that defines a curved surface shape of the reflection surface 44 of the reflector 15. More specifically, the first face 57 is formed with a parabolic-cylindrical surface such that the vertical cross section thereof relative to the shaft is parabolic. The reflector 15 is of a flat planar shape before it is assembled. However, when it is assembled, the reflection surface 44 of the reflector 15 is bent along the first face 57 and thereby the reflection surface 44 is formed into a predetermined parabolic-cylindrical surface.

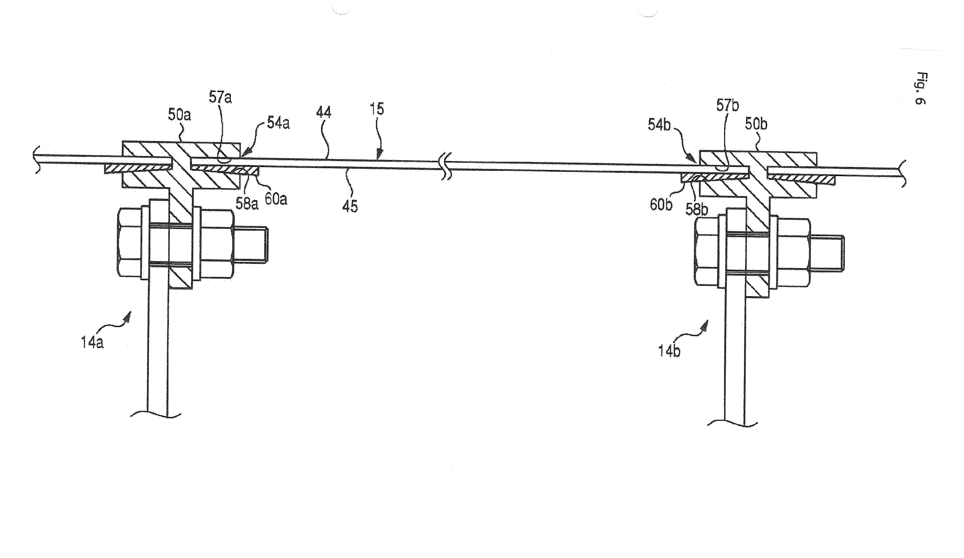

FIG. 6 shows how a single piece of reflector 15 is supported by two adjacent arms 14a and 14b. As shown in FIG. 6, a groove 54a in a reflector supporting section 50a of one arm 14a and a groove 54b in a reflector supporting section 50b of the other adjacent arm 14b are face each other. Inserting the both ends of the reflector 15 into the two grooves 54a and 54b enables the reflector 15 to be supported by the arms 14a and 14b with the reflector 15 being bent in the curved surface shape.

In this structure according to the present embodiment, plate members 60a and 60b, whose cross section is formed in a wedge shape, are press-fitted between both ends of a back side 45 of the reflector 15 and second faces 58a and 58b, respectively, in order that the both ends of the reflection surface 44 of the reflector 15 can be reliably adhered tightly to first faces 57a and 57b that are reflection-surface forming faces. In the present embodiment, the spacing between the first faces 57a and 57b and the second faces 58a and 58b is set larger than the thickness of the reflector 15 to make it easier for the both ends of the reflection surface 44 to be inserted into the grooves 54a and 54b. Thus, if no wedge-shaped plate members 60a and 60b are to be press-fitted, the both ends of the reflection surface 44 of the reflector 15 will not be attached firmly to the first faces 57a and 57b, which are the reflection-surface forming faces, and therefore the reflection surface 44 may possibly not be formed with a desired parabolic-cylindrical surface. If the reflection surface 44 is not formed as the parabolic-cylindrical surface designed primarily, the expected light collection efficiency will not be attained and therefore the power generation efficiency may deteriorate.

In the light of this, the both ends of the reflector 15 are adhered tightly to the first faces 57a and 57b using the wedge-shaped plate members 60a and 60b. Thereby, the reflection surface 44 of the reflector 15 can be reliably formed with the desired parabolic-cylindrical surface. Forming the reflection surface 44 of the reflector 15 with a designed curved surface increases the sunlight collection efficiency and therefore can improve the power generation efficiency. The wedge-shaped plate member may be configured such that the plate member is divided in the length direction of the arm or it is provided across entire length of the arm. Also, the plate member and the reflector may be secured to the reflector supporting section using a bolt after the wedge-shaped plate member is press-fitted between the back side of the reflector and the second face.

Instead of the embodiment shown in FIG. 6, the following structure may be employed. That is, the second faces 58a and 58b serve as the reflection-surface forming faces, and the wedge-shaped plate members 60a and 60b are driven in between the first faces 57a and 57b and the both ends of the reflection surface 44. In this case, however, the area of reflection surface 44 gets smaller due to the wedge-shaped plate members 60a and 60b, and the reflection surface 44 may possibly be damaged when the wedge-shaped plate members 60a and 60b are driven in therebetween. Thus it is desirable, as with the embodiment shown in FIG. 6, that the reflector 15 be arranged such that the reflection surface 44 faces the first faces 57a and 57b (reflection-surface forming faces) and the back side 45 faces the second faces 58a and 58b and that the wedge-shaped plate members 60a and 60b be configured such that the plate members 60a and 60b are driven in between the second faces 58a and 58b and the both ends of the back side 45 of the reflector 15.

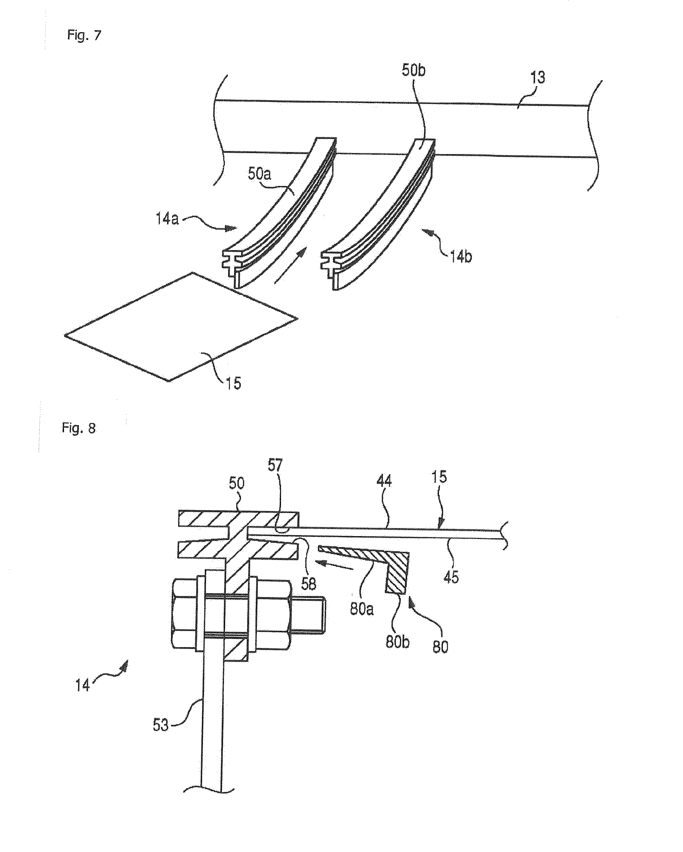

FIG. 7 is a diagram to explain a method for assembling and installing a solar-thermal collector according to the present embodiment. In the present embodiment, the reflectors 15 manufactured at a factory are transported, as flat sheets, to an installation location. Also, a plurality of arms 14 (e.g., two arms 14a and 14b shown in FIG. 7) are transported to the installation location while the arms are removed from the shaft 13. The stands 11 and 12 (see FIG. 1) are first installed on the ground, and the stands 11 and 12 support the shaft 13. Then, the arms 14a and 14b are arranged at an interval along the length of the shaft 13 and are fixed to the shaft 13. Then, the both ends of the reflector 15 are inserted, from extended tip parts of the arms 14a and 14b, into a groove of the reflector supporting section 50a of one arm 14a of adjacent arms 14a and 14b and a groove of the reflector supporting section 50b of the other arm 14b of the adjacent arms 14a and 14b, respectively. And the reflector 15 is bent or curved along the reflection-surface forming faces of the arms 14a and 14b. After the reflector 15 has been inserted thereinto, not-shown wedge-shaped plate members are driven in between the second faces of the reflector supporting sections 50a and 50b and the both ends of the back side of the reflector 15, respectively. As a result, the both ends of the reflection surface of the reflector 15 are attached firmly to the reflection-surface forming faces (first faces) of the reflector supporting sections 50a and 50b and thereby the reflection surface of the reflector 15 can be formed with a desired parabolic-cylindrical surface.

As described above, by employing the solar-thermal collector 10 according to the present embodiment, the reflectors 15 can be transported as the flat sheets to the installation location. Thus, less space is occupied by the reflectors 15 and other components when they are transported. Hence the transportation efficiency can be improved. Also, simple flat-shape reflectors 15 are manufactured at the factory and then the high-precision reflection surfaces of a parabolic-cylindrical shape can be formed at the installation site by using a simple method as described above. Thus the manufacturing cost can be reduced as compared with the case where the glass-made reflecting mirrors of the parabolic-cylindrical shape are produced at the factory. Hence, the present embodiment can provide a low-cost solar-thermal collector.

FIG. 8 is a diagram to explain a modification of an adhesion structure where a reflection surface is attached firmly to a reflection-surface forming face. In the embodiment described in conjunction with FIG. 6, the simple plate members, whose cross section is a wedge shape, are used as adhesion members by which the both ends of the reflection surface of the reflector are adhered tightly to the reflection-surface forming faces. It is to be noted here, however, that the structure of the adhesion member is not limited thereto. For example, as with the modification shown in FIG. 8, the adhesion member may be a member 80, whose cross section is approximately an L-shape, which is comprised of a plate part 80a, whose cross section is a wedge shape, and a driving part 80b, which is provided at an end of the plate part 80a. In this modification, the driving part 80b is hit by a hammer or the like. Thus, this modification is advantageous in that the adhesion member is easily driven in between the second face 58 of the reflector supporting section 50 and the back side 45 of the reflector 15.

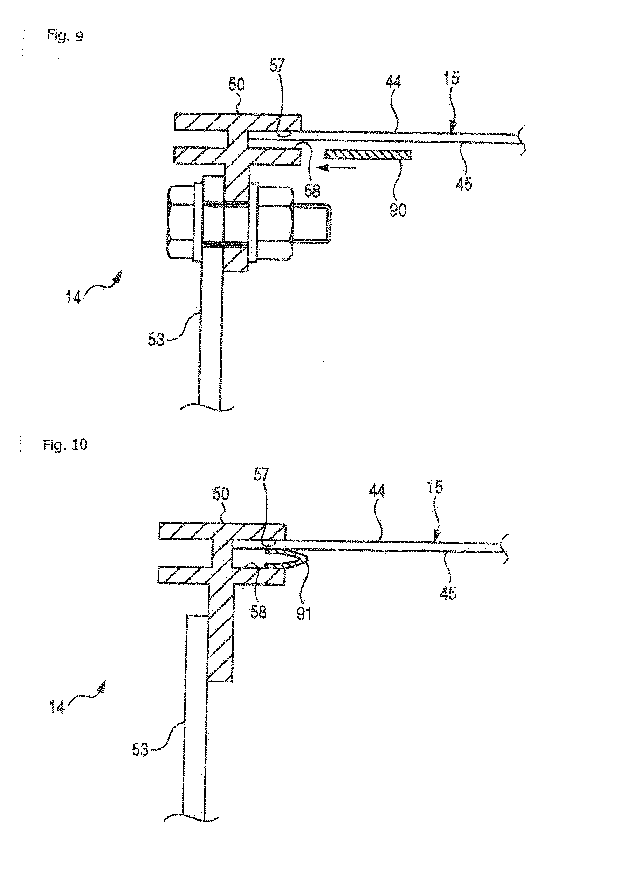

FIG. 9 is a diagram to explain another modification of the adhesion structure where the reflection surface is attached firmly to the reflection-surface forming face. As shown in the modification of FIG. 9, the adhesion member may be a simple plate-like member having a uniform thickness. In this modification, there is no need for the adhesion member to be processed into a wedge shape and therefore this modification is advantageous in that the manufacturing cost of the adhesion members can be reduced.

FIG. 10 is a diagram to explain still another modification of the adhesion structure where the reflection surface is attached firmly to the reflection-surface forming face. A plate spring 91, whose cross section is a V shape, is provided between the second face 58 of the reflector supporting section 50 and the back side 45 of the reflector 15. And the reflection surface 44 of the reflector 15 is attached firmly to the reflection-surface forming face (the first face 57) by the elastic force of the plate spring 91. The member provided between an end of the reflector 15 and the second face 58 of the reflector supporting section 50 is not limited to any particular one as long as it is an elastic member. Such an elastic member may be an elastic member formed of rubber, for instance.

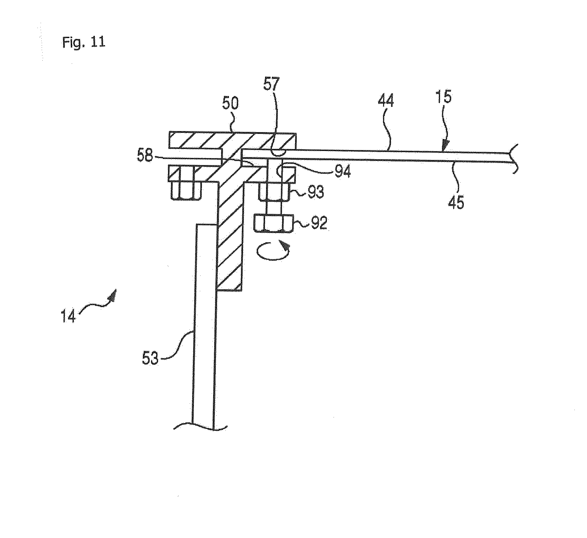

FIG. 11 is a diagram to explain still another modification of the adhesion structure where the reflection surface is attached firmly to the reflection-surface forming face. In this modification, a through-hole 94 is formed in the second face 58, and a nut 93 having an internal thread is secured on a side opposite to a second face side of the through-hole 94. A bolt having an external thread is fitted on the nut 93. Rotating the bolt 92 causes an end of the reflector 15 to be pressed by a tip part of the bolt 92 and thereby the reflection surface 44 of the reflector 15 is attached firmly to the reflection-surface forming face (the first face 57). As with the present modification, the adhesion members may be achieved by the use of a rod-like member, such as the bolt 92, and a securing member by which to secure a rod-like member, such as the nut 93.

In the above-described embodiments, the adhesion members are provided on both the two adjacent arms 14 and then the both ends of the reflection surface of the reflector 15 are attached firmly to the reflection-surface forming faces of the reflector supporting section. However, as long as the reflection surface of the reflector 15 is formed with a desired curved surface, the reflection surface of the reflector 15 may be attached firmly to the reflection-surface forming face of only one of the two adjacent arms 14.

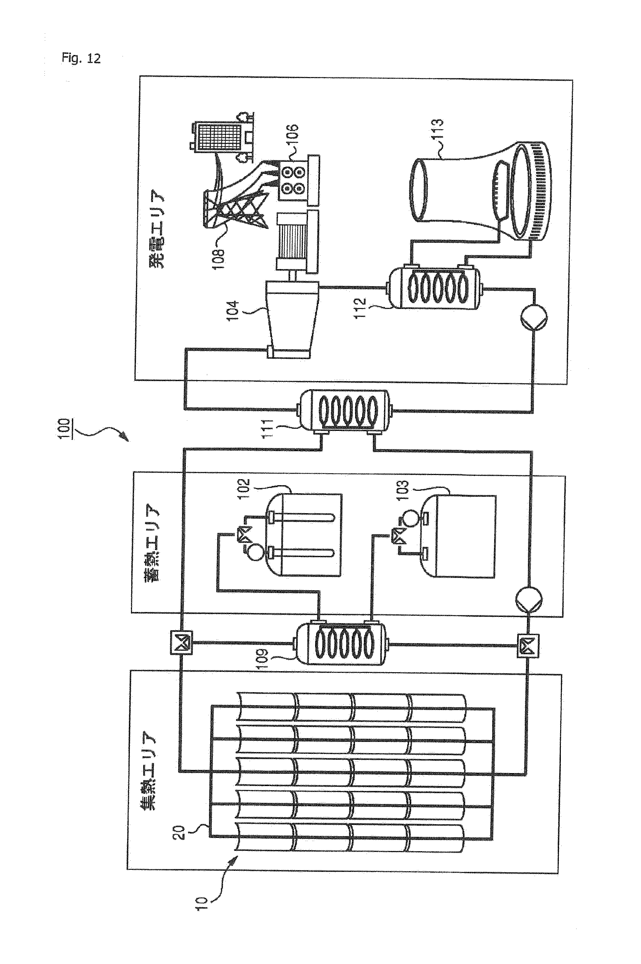

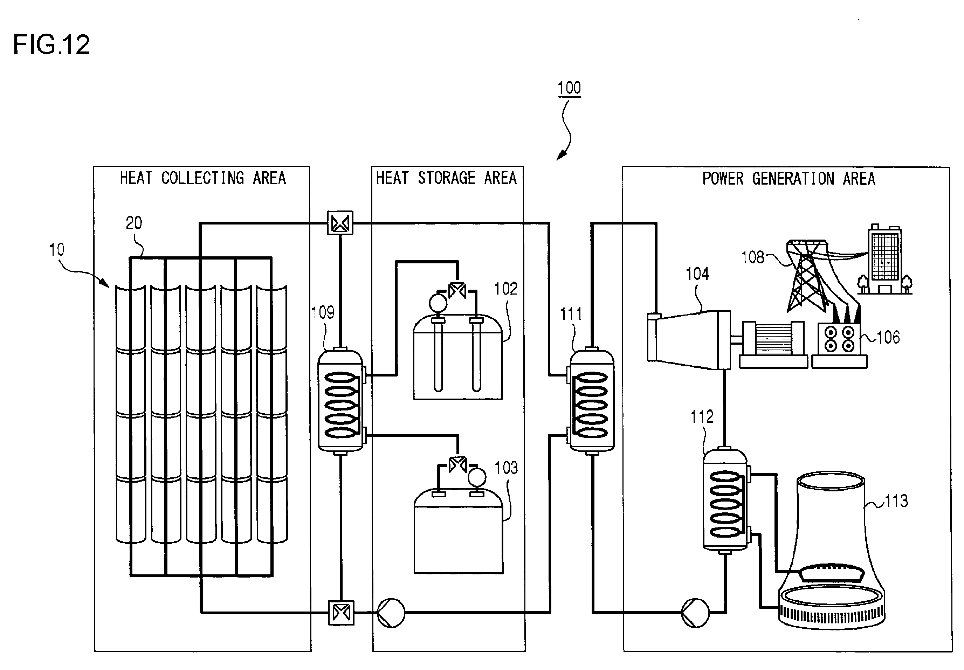

FIG. 12 is a diagram to explain a solar thermal power generation system 100 using the solar-thermal collector 10 according to the above-described embodiments. As shown in FIG. 12, the solar thermal power generation system 100 is mainly divided into three main areas, which are a heat collecting area, a heat storage area, and a power generation area.

The heat collecting area is comprised mainly of the above-described solar-thermal collector 10, the heat collecting tube 20, and the not-shown pump for circulating the fluid within the heat collecting tube. In the heat collecting area, the sunlight is concentrated onto the heat collecting tube 20 by the solar-thermal collector 10 and then the fluid circulating within the heat collecting tube 20 is heated. The thus heated fluid is sent to the heat storage area.

The heat storage area is comprised mainly of a hot tank 102, a cold tank 103, and a first heat exchanger 109. If there is a heat storage exceeding a required electric power, a low-temperature fluid in the cold tank 103 will be warmed up through the first heat exchanger 109 and then transferred to the hot tank 102 where the heat is stored. Storing the heat of the heated fluid using the hot tank 102 enables the electric power generation when not enough heat has been collected or at night when the sunlight is not available.

The power generation area is comprised mainly of a steam turbine 104, a power generator 106, a second heat exchanger 111, a third heat exchanger 112, and a cooling tower 113. The second heat exchanger 111 generates steam using the heated fluid, and the steam turbine 104 rotates the turbine using the steam. The power generator 106 generates electricity through the rotation of the turbine and transmits the thus generated electricity through power transmission lines 108. The third heat exchanger 112 changes steam back to fluid and the cooling tower 113 cools this fluid.

By employing the above-describe low-cost solar-thermal collector 10, the construction cost of the solar thermal power generation system 100 can be reduced.

The present invention has been described based upon illustrative embodiments. These embodiments are intended to be illustrative only and it will be obvious to those skilled in the art that various modifications to the combination of constituting elements and processes could be developed and that such modifications are also within the scope of the present invention.

### [Explanation of Reference Numerals]

- 10: Solar-thermal collector
- 13: Shaft
- 14: Arm
- 15: Reflector
- 20: Heat collecting tube
- 40: Flexible flat sheet
- 41: Film mirror
- 42: Flexible film substrate
- 43: Reflective layer
- 44: Reflection surface
- 50: Reflector supporting section
- 53: Arm body
- 54: Groove
- 57: First face
- 58: Second face
- 100: Solar thermal power generation system
- 104: Steam turbine
- 106: Power generator

### [Industrial Applicability]

The present invention can be utilized in a solar thermal power generation method.

## Claims

1. A solar-thermal collector comprising:
a shaft supported by stands;
at least two arms, each having a reflection-surface forming face, configured to be secured to the shaft and arranged at intervals in a direction of length of the shaft, the reflection-surface forming face being such that a vertical cross section thereof relative to the shaft is curved;
a flexible reflector configured to be supported by the two arms at both ends of the reflector, the reflector reflecting and concentrating the sunlight; and
an adhesion means configured to firmly attach the ends of the reflector to the reflection-surface forming face of each of the arms.

2. The solar-thermal collector according to claim 1, wherein the arm has a second face that is arranged at a predetermined interval relative to the reflection-surface forming face, and
wherein the end of the reflector is inserted into a groove, which is formed between the reflection-surface forming face and the second face, whereby the reflector is supported by the arms.

3. The solar-thermal collector according to claim 2, wherein the reflector is arranged such that a reflection surface of the reflector faces the reflection-surface forming face of the arm and such that a back side of the reflection surface thereof faces the second face of the arm.

4. The solar-thermal collector according to claim 2 or claim 3, wherein the adhesion means includes a plate-like part in at least part of the adhesion means, and
wherein the end of the reflector is firmly attached to the reflection-surface forming face of the arm by press-fitting the plate-like part in between the end of the reflector and the second face of the arm.

5. The solar-thermal collector according to claim 4, wherein the plate-like part is formed in a wedge shape.

6. A solar thermal power generation system comprising:
the solar-thermal collector according to any one of claim 1 to claim 5;
a heat collecting tube configured to receive light concentrated by the solar-thermal collector;
a steam turbine configured to be rotated by steam generated using a heated fluid in the heat collecting tube; and
a power generator configured to generate electricity through rotation of the steam turbine.

7. A method, wherein a flexible reflector, which reflects and concentrates the sunlight, is mounted to at least two arms, each having a reflection-surface forming face, which are secured to a shaft and arranged at intervals in a direction of length of the shaft, the reflection-surface forming face being such that a vertical cross section thereof relative to the shaft is curved, the method including:
a first step of curving the reflector along the reflection-surface forming face of the arm; and
a second step of firmly attaching an end of the reflector to the reflection-surface forming face of the arm.

8. The method according to claim 7, wherein the arm has a second face spaced apart from the reflection-surface forming face and a groove formed between the second face and the reflection-surface forming face, and
wherein the first step includes a step of inserting the end of the reflector into the groove.
